# EUROPÄISCHE PATENTSCHRIFT

(11) **EP 2 455 587 B1**
(45) Veröffentlichungstag und Bekanntmachung des Hinweises auf die Patenterteilung: **23.01.2019**
(21) Anmeldenummer: 10191462.0
(22) Anmeldetag: 17.11.2010
(51) Int. Cl.: F01D 5/22, F01D 5/30, F01D 11/00

(54) **Rotor für eine Strömungsmaschine, zugehörige Strömungsmaschine und Verfahren zum Herstellen, Reparieren oder Überholen**
Rotor for a turbomachine, corrresponding turbomachine and method for manufacturing, repairing or upgrading
Rotor de turbomachine, turbomachine et procédé de fabrication, de réparation ou de révision associés

(43) Veröffentlichungstag der Anmeldung: 23.05.2012
(73) Patentinhaber: MTU Aero Engines AG, 80995 München (DE)
(72) Erfinder: Stiehler, Frank, 04924 Bad Liebenwerda (DE); Borufka, Peter, 82319 Starnberg (DE)

(56) Entgegenhaltungen:
- EP-A1- 0 062 558
- EP-A1- 0 717 169
- EP-A1- 1 985 810
- EP-A2- 0 851 096
- EP-A2- 1 167 691
- EP-A2- 2 009 247
- EP-A2- 2 381 067
- WO-A1-03/102380
- WO-A1-2010/080614
- DE-A1- 2 430 181
- GB-A- 2 226 368
- US-A- 3 709 631
- US-A- 4 784 571
- US-A- 4 872 810

## Beschreibung

Die Erfindung betrifft einen Rotor der im Oberbegriff des Patentanspruchs 1 angegebenen Art für eine Strömungsmaschine sowie eine Strömungsmaschine mit einem Rotor. Die Erfindung betrifft weiterhin ein Verfahren der im Oberbegriff des Patentanspruchs 12 angegebenen Art zum Herstellen eines Rotors für eine Strömungsmaschine.

Ein derartiger Rotor ist bereits aus dem Stand der Technik bekannt und umfasst Dämpfungselemente, die zum Dämpfen von Schaufelschwingungen als sogenannte Unterplattformdämpfer in schaufelhalsseitig ausgebildete Durchgangs- bzw. Entlastungskanäle zwischen benachbarten Schaufeln eingebracht werden. Aufgrund ihrer Lage zum schwingenden System bieten diese Dämpfungselemente jedoch häufig keine ausreichende Dämpfung der verschiedenen Schwingungsformen.

Die EP 1 795 703 A2 offenbart einen beschaufelten Rotor, bei welchem jede Laufschaufel unterhalb ihrer jeweiligen Schaufelplattform eine Kühlkammer aufweist, in die während des Betriebs der zugeordneten Turbine Kühlluft geleitet wird. Die Kühlkammer ist an ihrem dem Schaufelhals der Laufschaufel abgewandten Ende mit Hilfe eines Dämpfungselements abgedichtet und weist eine oder mehrere Austrittsöffnungen in der Schaufelplattform auf, durch welche die Kühlluft austreten kann. Alternativ ist vorgesehen, dass die Kühlkammer fluidisch vom inneren Kühlkanal der Laufschaufel entkoppelt ist und durch Eintrittsöffnungen im Dämpfungselement mit Kühlluft versorgt wird. Das Dämpfungselement besteht im Wesentlichen aus einem plattenförmigen Element, welches sich im montierten Zustand linear entlang einer korrespondierenden Dichtfläche der Kühlkammer erstreckt. Der radial obere Endbereich des Dämpfungselements stützt sich gegen eine Seitenfläche einer angrenzenden Laufschaufel ab. Unterhalb der Dichtfläche der Kühlkammer sind Vorsprünge ausgebildet, die in einem spitzen Winkel zur Dichtfläche der Kühlkammer angeordnet sind und korrespondierende, im Querschnitt etwa V-förmige Endbereiche des Dämpfungselements abstützen. Durch den spitzen Winkel zwischen der Dichtfläche der Kühlkammer und den Vorsprüngen werden während des Betriebs der Strömungsmaschine Reibungskräfte erzeugt, die zur Abdichtung der Kühlkammer sowie zur Schwingungsdämpfung verwendet werden. Da das Dämpfungselement nicht nur Schwingungen dämpfen, sondern gleichzeitig eine vergleichsweise großen Fläche abdichten muss, sind sowohl das Dämpfungselement als auch die Laufschaufel hohen konstruktiven Einschränkungen unterworfen.

Weiterhin ist es aus der EP 0 511 022 B1 bekannt, Laufschaufeln eines Rotors über ein drahtartiges Dämpfungselement miteinander zu verspannen, indem das Dämpfungselement durch die Schaufelblätter geführt wird. Diese Lösung hat jedoch insbesondere den Nachteil, dass sich das drahtartige Dämpfungselement im Strömungspfad bzw. Ringraumkanal befindet. Insbesondere ist diese Lösung nicht bzw. nur bedingt bei innen gekühlten Schaufeln anwendbar.

Aus der EP 1 944 466 A1 ist es bekannt, bei einem Rotor für eine Strömungsmaschine Dämpfungselemente in Taschen von benachbarten Laufschaufeldeckbändern anzuordnen. Bei einer Rotation des Rotors werden die Dämpfungselemente aufgrund der Fliehkraft radial nach oben bewegt und bewirken somit eine mechanische Kopplung der Laufschaufeldeckbänder. Diese Lösung ist jedoch nicht für Rotoren ohne äußeres Deckband geeignet. Darüber hinaus ist auch mit diesem System keine optimale Einstellung der Schwingungsdämpfung möglich.

EP 0 851 096 A2 offenbart den jeweiligen Oberbegriff der Patentansprüche 1 und 12.

Aufgabe der vorliegenden Erfindung ist es, einen Rotor der eingangs genannten Art zu schaffen, welcher ein verbessertes Schwingungsverhalten besitzt. Eine weitere Aufgabe der Erfindung ist es, ein Verfahren zum Herstellen eines Rotors mit einem verbesserten Schwingungsverhalten zu schaffen.

Die Aufgaben werden erfindungsgemäß durch einen Rotor mit den Merkmalen des Patentanspruchs 1 sowie durch ein Verfahren mit den Merkmalen des Patentanspruchs 12 gelöst. Vorteilhafte Ausgestaltungen der Erfindung sind in den jeweiligen Unteransprüchen angegeben, wobei vorteilhafte Ausgestaltungen des Rotors als vorteilhafte Ausgestaltungen des Verfahrens und umgekehrt anzusehen sind.

Bei einem erfindungsgemäßen Rotor für eine Strömungsmaschine, welcher ein verbessertes Schwingungsverhalten besitzt, ist vorgesehen, dass das Dämpfungselement entlang seiner bezüglich einer Drehachse des Rotors axialen Erstreckung radial nach oben gewölbt ist. Da das Dämpfungselement während der Rotation des Rotors aufgrund des Fliehkraftfeldes radial nach oben bewegt wird, wird durch die gewölbte bzw. gebogene Ausgestaltung eine stabile symmetrische Selbstausrichtung des Dämpfungselements und eine zuverlässige Anlage an den zugeordneten

Laufschaufeln erreicht. Im Unterschied zum Stand der Technik kann zudem möglichst viel Masse des Dämpfungselements möglichst weit nach radial oben verlagert werden. Durch die vorzugsweise symmetrische Anordnung zwischen benachbarten Schaufelplattformen ist das Dämpfungselement in einer Position angeordnet, in der bei Schwingvorgängen ausreichende Verschiebungen der schwingenden Strukturen auftreten. Durch die Anordnung des Dämpfungselements zwischen den Schaufelplattformen kann aufgrund der Relativverschiebungen zwischen dem Dämpfungselement und den benachbarten Laufschaufeln bzw. Schaufelplattformen zusätzlich sehr viel Energie auch bei kritischen Resonanzdurchgängen, beispielsweise aufgrund von Biege- und Torsionsschwingungen, dissipiert werden, wodurch der Rotor dämpfungsmechanisch besonders robust ist. Weiterhin kann das Dämpfungselement besonders einfach, kostengünstig und bauraumsparend im Rotor integriert werden. Der zur Verfügung stehende konstruktive Gestaltungsraum kann dabei optimal ausgenutzt werden, so dass die Gestaltung und Größe des Dämpfungselements im Unterschied zum Stand der Technik derart gewählt werden können, dass die Auslegungs- und Umsetzungsanforderungen vollständig erfüllt werden. Dabei dient die Masse des Dämpfungselements als Optimierungsparameter sowie zur Definition von Schaltpunkten zwischen einem sogenannten "locked und slipping", das heißt zwischen einem relativ zur Laufschaufel ortsfesten und einem relativ zur Laufschaufel beweglichen Zustand des Dämpfungselements. Das Dämpfungselement kann darüber hinaus sehr einfach montiert und demontiert werden, wodurch entsprechende Kostenvorteile bei Herstellung, Reparatur oder Überholung des Rotors erzielt werden. Der Rotor kann dabei grundsätzlich zur Verwendung in Verdichter- oder Turbinenlaufstufen mit und ohne Deckband, mit oder ohne Schaufelkühlung sowie mit oder ohne Schaufelhohlräume ausgebildet sein. Weiterhin kann grundsätzlich vorgesehen sein, dass zwischen mehreren und/oder allen Schaufelplattformen des Rotors ein und/oder mehrere Dämpfungselemente angeordnet sind, wodurch eine besonders flexible Anpassbarkeit an unterschiedliche Anforderungsprofile und Ausgestaltungsformen des Rotors gegeben ist.

Gemäß der Erfindung ist vorgesehen, dass zwischen wenigstens zwei benachbarten Laufschaufeln ein Dichtungselement angeordnet ist, mittels welchem ein Austausch von Strömungsmedium in radialer Richtung zwischen den Laufschaufeln hindurch zumindest reduzierbar ist. Dies ermöglicht die Verminderung von Leckagen, wodurch beispielsweise der Wirkungsgrad einer dem Rotor zugeordneten Strömungsmaschine vorteilhaft gesteigert wird.

Erfindungsgemäß ist das Dichtungselement radial oberhalb des Dämpfungselements angeordnet.

Weitere Vorteile ergeben sich, wenn das Dichtungselement mit dem Dämpfungselement verbunden und/oder entlang seiner bezüglich einer Drehachse des Rotors axialen Erstreckung radial nach oben gewölbt ist. Dies ermöglicht eine besonders kompakte und mechanisch robuste Anordnung von Dicht- und Dämpfungselement. Zudem kann mit Hilfe des Dämpfungselements die Dichtwirkung des Dichtungselements zusätzlich gesteigert werden, wodurch beispielsweise die Einstellung und Führung von Kühlluftmasseströmen und eine besonders gute Abdichtung gegenüber Heißgaseinzug oder dergleichen ermöglicht ist. Durch die radiale Wölbung des Dichtungselements können die vorstehend im Zusammenhang mit dem Dämpfungselement beschriebenen Vorteile, insbesondere im Hinblick auf eine radial möglichst weit oben liegende Massenverteilung sowie auf eine stabile und symmetrische Selbstausrichtung während des Betriebs, verwirklicht werden.

In weiterer Ausgestaltung der Erfindung ist vorgesehen, dass ein Mittenbereich des Dämpfungselements gegenüber den Enden des Dämpfungselements biege- und/oder torsionsweicher ausgebildet ist und/oder dass das Dämpfungselement mehrteilig und/oder im Querschnitt spiegelsymmetrisch ausgebildet ist. Durch eine biege- und/oder torsionsweichere Ausgestaltung des Mittelbereichs kann eine besonders sichere Anlage an den Laufschaufeln sichergestellt werden. Umgekehrt erlauben die mechanisch stabileren Endbereiche des Dämpfungselements eine bessere Befestigung an der betreffenden Laufschaufel. Weiterhin kann vorgesehen sein, dass das Dämpfungselement mehrteilig ausgebildet ist, so dass zur einfachen Montage oder Reparatur des Rotors ein erstes Dämpfungselementteil von der Hochdruckseite und ein zweites Dämpfungselementteil von der Niederdruckseite des Rotors aus montiert bzw. demontiert werden können. Der Rotor bzw. die Laufschaufeln können vorzugsweise derart ausgebildet sein, dass das Dämpfungselement im finalen Montagezustand des Rotors montierbar bzw. demontierbar ist. Indem das Dämpfungselement im Querschnitt spiegelsymmetrisch ausgebildet ist, wird eine besonders gute Dämpfungswirkung sowie eine sichere Montage gewährleistet.

Weitere Vorteile ergeben sich, indem unterhalb einer Schaufelplattform wenigstens einer Laufschaufel zumindest eine Kavität ausgebildet ist, innerhalb welcher das Dämpfungselement und/oder gegebenenfalls das Dichtungselement bereichsweise angeordnet ist. Hierdurch steht dem Dämpfungselement bzw. dem Dichtungselement ein vergrößerter Bauraum zur Verfügung, so dass Geometrie und Masse des Dämpfungs- bzw. Dichtungselements entsprechend flexibler variiert werden können. Darüber hinaus wird mit Hilfe der Kavität die bewegte Masse des Rotors
vorteilhaft verringert. In weiterer Ausgestaltung kann vorgesehen sein, dass die Laufschaufel bzw. ihre Schaufelplattform zwei seitliche bzw. gegenüberliegende Kavitäten aufweist.

In einer weiteren vorteilhaften Ausgestaltung der Erfindung ist vorgesehen, dass die Schaufelplattform wenigstens einer Laufschaufel ein Führungselement umfasst, mittels welchem eine Seite und/oder eine Unterseite des Dämpfungselements abstützbar ist. Hierdurch kann das Dämpfungselement im montierten Zustand zuverlässig abgestützt und lagegesichert werden. Das Führungselement kann in weiterer Ausgestaltung vorteilhafterweise gekrümmt ausgeführt sein. Das Dämpfungselement kann zudem besonders einfach montiert oder demontiert werden, wenn das Führungselement während der Montage des Dämpfungselements zusätzlich als Führungs- und Kontaktbahn fungiert.

In einer weiteren vorteilhaften Ausgestaltung der Erfindung ist vorgesehen, dass das Führungselement im Bereich einer Hochdruckseite und/oder einer Niederdruckseite des Rotors angeordnet ist. Hierdurch kann ein unerwünschtes Verkanten des Dämpfungselements verhindert werden.

Dabei hat es sich weiterhin als vorteilhaft gezeigt, wenn im radial äußeren Bereich wenigstens einer Schaufelplattform eine innenliegende Anlagefläche vorgesehen ist, mit welcher das Dämpfungselement und/oder gegebenenfalls das Dichtungselement zumindest beim Betrieb des Rotors in Anlage bringbar ist. Da das Dämpfungselement bzw. das Dichtungselement während der Rotation des Rotors aufgrund des Fliehkraftfeldes radial nach oben bewegt werden, wird hierdurch auf konstruktiv besonders einfache Weise sichergestellt, dass sich das Dämpfungs- und/oder Dichtungselement an die Anlagefläche anlegt. Hierdurch wird die entsprechende Dämpfungs- und/oder Dichtwirkung zusätzlich verbessert. Dabei kann durch eine geometrische Anpassung der Kontaktgeometrie zwischen dem Dämpfungs- bzw. Dichtungselement und der Anlagefläche die Dämpfungs- bzw. Dichtwirkung weiter gesteigert werden.

In einer weiteren vorteilhaften Ausgestaltung der Erfindung ist vorgesehen, dass die Schaufelplattform wenigstens einer Laufschaufel ein radial inneres Schaufeldeckband zum zumindest teilweisen Begrenzen eines Strömungskanals der Strömungsmaschine bildet. Mit anderen Worten ist vorgesehen, dass die Schaufelplattform die radial innere Begrenzung für die heißen Verbrennungsgase der Turbinenstufe definiert. Hierdurch werden das Dämpfungselement sowie die sonstigen, radial unterhalb der Schaufelplattform liegenden Bereiche der Laufschaufel und des Rotors vor Heißgasen geschützt.

In einer weiteren Ausgestaltung ist vorgesehen, dass die Laufschaufeln lösbar oder stoffschlüssig mit dem Rotorgrundkörper verbunden sind. Hierdurch wird eine hohe konstruktive Freiheit erreicht, da der Rotor wahlweise in montierter Bauweise und/oder in integraler BLISK-(Bladed Disk) bzw. BLING-(Bladed Ring) Bauweise ausgeführt sein kann.

Ein weiterer Aspekt der Erfindung betrifft eine Strömungsmaschine mit einem Rotor nach einem der vorhergehenden Ausführungsbeispiele. Die sich hieraus ergebenden Vorteile sind den vorhergehenden Beschreibungen zu entnehmen. Die Strömungsmaschine ist in weiterer Ausgestaltung als Flugzeugturbine ausgebildet.

Ein weiterer Aspekt der Erfindung betrifft ein Verfahren zum Herstellen, Reparieren und/oder Überholen eines Rotors für eine Strömungsmaschine, bei welchem Laufschaufeln mit einem Rotorgrundkörper verbunden werden, wobei zwischen wenigstens zwei benachbarten Laufschaufeln ein Dämpfungselement zum Dämpfen von Schaufelschwingungen angeordnet wird. Dabei ist erfindungsgemäß vorgesehen, dass das Dämpfungselement entlang seiner bezüglich einer Drehachse des Rotors axialen Erstreckung radial nach oben gewölbt wird. Hierdurch wird hierdurch auf konstruktiv besonders einfache Weise eine verbesserte Dämpfungswirkung sichergestellt, da sich das Dämpfungselement während des Betriebs des Rotors aufgrund des Fliehkraftfeldes radial nach oben bewegt und an seine zugeordneten Anlageflächen der Laufschaufeln anlegt. Darüber hinaus kann durch die Wölbung die Masse des Dämpfungselements möglichst weit nach radial oben verschoben werden. Zudem wird das Dämpfungselement in einer Position angeordnet, in der bei Schwingvorgängen ausreichende Verschiebungen der schwingenden Strukturen auftreten. Durch das Anordnen des Dämpfungselements zwischen den Schaufelplattformen kann aufgrund der Relativverschiebungen zwischen dem Dämpfungselement und den benachbarten Laufschaufeln bzw. Schaufelplattformen sehr viel Energie auch bei kritischen Resonanzdurchgängen, beispielsweise aufgrund von Biege- und Torsionsschwingungen, dissipiert werden, wodurch der Rotor dämpfungsmechanisch besonders robust ist. Weiterhin kann das Dämpfungselement besonders einfach, kostengünstig und bauraumsparend im Rotor integriert werden. Der zur Verfügung stehende konstruktive Gestaltungsraum kann dabei optimal ausgenutzt werden, so dass die Gestaltung und Größe des Dämpfungselements im Unterschied zum Stand der Technik derart gewählt werden können, dass die Auslegungs- und Umsetzungsanforderungen vollständig erfüllt werden. Dabei dient die Masse des Dämpfungselements als Optimierungsparameter und zur Definition von Schaltpunkten zwischen einem sogenannten "locked und slipping" Zustand der Dämpfung. Das Dämpfungselement kann darüber hinaus sehr einfach montiert und demontiert werden, wodurch entsprechende Kostenvorteile bei Herstellung, Reparatur oder Überholung des Rotors erzielt werden. Der Rotor kann dabei grundsätzlich zur Verwendung in Verdichter- und Turbinenlaufstufen mit und ohne Deckband, mit oder ohne Schaufelkühlung sowie mit oder ohne Schaufelhohlräume ausgebildet sein. Weiterhin kann grundsätzlich vorgesehen sein, dass zwischen mehreren und/oder allen Schaufelplattformen des Rotors ein und/oder mehrere Dämpfungselemente angeordnet werden, wodurch eine besonders flexible Anpassbarkeit an unterschiedliche Anforderungsprofile und Ausgestaltungsformen des Rotors gegeben ist. Weitere sich ergebende Vorteile sind den vorhergehenden Beschreibungen zu entnehmen. Erfindungsgemäß ist vorgesehen, dass das Dämpfungselement von einer Niederdruckseite und/oder von einer Hochdruckseite des Rotors aus zwischen die Schaufelplattformen bewegt wird. Dies ermöglicht eine besonders einfache Montage und Demontage, wodurch entsprechende Kostenvorteile bei Herstellung, Reparatur oder Überholung des Rotors erzielt werden. Dabei kann auch vorgesehen sein, dass das Dämpfungselement mehrteilig ausgebildet ist und dass die einzelnen Dämpfungselementteile von unterschiedlichen Druckseiten des Rotors aus montiert bzw. demontiert werden können.

Weitere Vorteile ergeben sich, indem das Dämpfungselement entlang innenliegender Anlageflächen der benachbarten Schaufelplattformen bewegt wird, wobei die Anlageflächen entlang ihrer bezüglich einer Drehachse des Rotors axialen Erstreckung radial nach oben gewölbt sind. Dies ermöglicht eine zwangsgeführte und damit besonders einfache Montage oder Demontage des Dämpfungselements, wobei im montierten Zustand automatisch eine entsprechend gewölbte Längsschnittgeometrie des Dämpfungselements erhalten wird.

Erfindungsgemäß ist vorgesehen, dass zwischen wenigstens zwei benachbarten Laufschaufeln zusätzlich ein Dichtungselement angeordnet wird, mittels welchem während des Betriebs der Strömungsmaschine ein Austausch von Strömungsmedium in radialer Richtung zwischen den Laufschaufeln hindurch zumindest reduziert wird.

Dies ermöglicht die Verminderung von Leckagen und das Schließen der Spalte zwischen benachbarten Laufschaufeln, wodurch der Wirkungsgrad einer dem Rotor zugeordneten Strömungsmaschine vorteilhaft gesteigert wird. Dabei kann durch eine geometrische Anpassung der Kontaktgeometrie zwischen dem Dämpfungs- bzw. Dichtungselement und den Anlageflächen die Dämpfungswirkung zusätzlich gesteigert werden.

Erfindungsgemäß ist das Dichtungselement radial oberhalb des Dämpfungselements angeordnet.

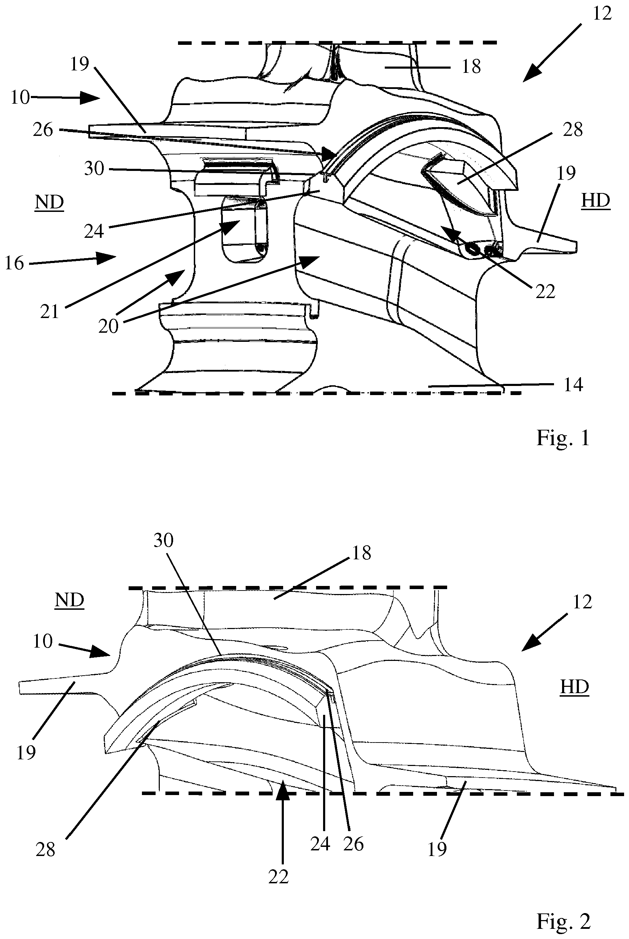

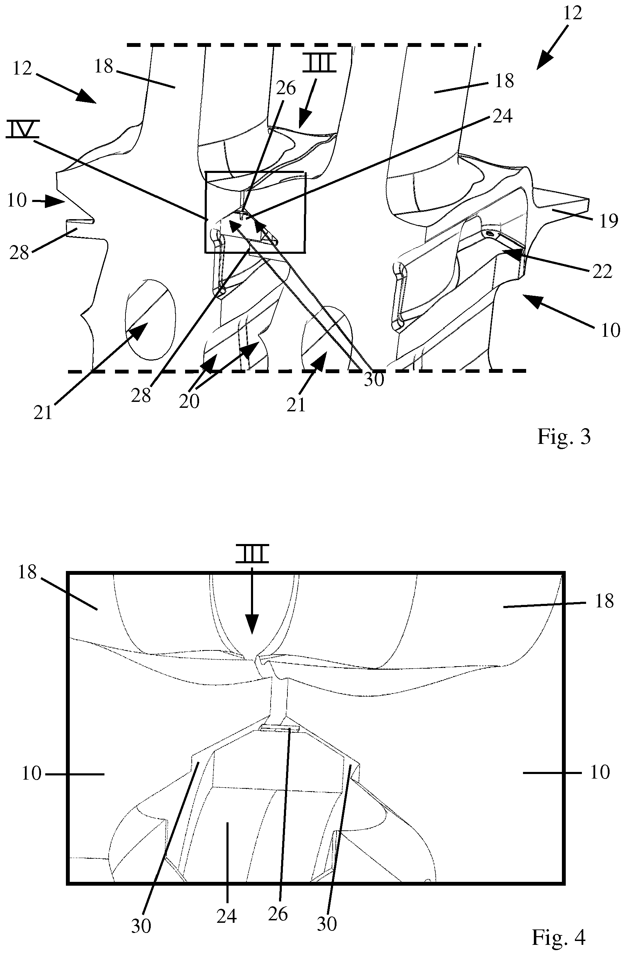

Weitere Merkmale der Erfmdung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Dabei zeigt:Fig. 1 eine schematische und teilgeschnittene Perspektivansicht einer Schaufelplattform einer Laufschaufel von der Niederdruckseite eines Rotors aus gesehen; Fig. 2 eine schematische Perspektivansicht der in Fig. 1 gezeigten Schaufelplattform von der Hochdruckseite des Rotors aus gesehen; Fig. 3 eine perspektivische Schnittansicht zweier benachbarter Laufschaufeln; und Fig. 4 eine vergrößerte Perspektivansicht des in Fig. 3 gezeigten Details IV.

Fig. 1 zeigt eine schematische und teilgeschnittene Perspektivansicht einer Schaufelplattform 10 einer Laufschaufel 12 von der Niederdruckseite ND eines Rotors aus gesehen. Fig. 1 wird im Folgenden in Zusammenschau mit Fig. 2 erläutert werden, in welcher eine schematische Perspektivansicht der in Fig. 1 gezeigten Schaufelplattform 10 von der Hochdruckseite HD des Rotors aus gesehen gezeigt ist.

Der Rotor, der vorliegend in integraler BLISK-(Bladed Disk) Bauweise für eine Turbinenstufe eines Flugzeugtriebwerks ausgebildet ist, umfasst einen Rotorgrundkörper 14, der in an sich bekannter Weise stoffschlüssig mit mehreren Laufschaufeln 12 verbunden ist. Von der abgebildeten Laufschaufel 12 ist in Fig. 1 ein bezüglich einer Drehachse des Rotors radial innerer Bereich eines sich an die Schaufelplattform 10 anschließenden Schaufelblatts 18 erkennbar. Die Schaufelplattform 10 bildet sowohl auf der Niederdruckseite ND als auch auf der Hochdruckseite HD des Rotors ein Schaufeldeckband 19 zum zumindest teilweisen Ab- und Begrenzen eines Strömungskanals des Flugzeugtriebwerks.

Um hohe thermische Spannungen im Rotorgrundkörper 14 zu vermeiden, weist ein Schaufelhals 16 der Laufschaufel 12 zu beiden Seiten in axialer Richtung zwischen der Nieder- und der Hochdruckseite ND, HD des Rotors verlaufende Entlastungskanäle oder -schlitze 20 auf. Des Weiteren umfasst die Laufschaufel 12 einen zentralen Kanal 21. Radial oberhalb der Entlastungskanäle 20 und radial unterhalb der Schaufelplattform 10 weist jede Laufschaufel 12 zu beiden Seiten Kavitäten 22 im Schaufelhals 16 auf. Innerhalb jeder Kavität 22 ist dabei bereichsweise ein Dämpfungselement 24 zum Dämpfen von Schaufelschwingungen angeordnet. Das Dämpfungselement 24 ist im Querschnitt spiegelsymmetrisch ausgebildet und weist an seinem radial oberen Endbereich eine Querschnittsfläche in Form eines gleichschenkligen Trapezes auf. Die Mittelebene des Dämpfungselements 24 verläuft dabei formal durch den Schaufeldeckbandspalt III zwischen aneinander angrenzenden Laufschaufeln 12 (s. Fig. 3).

Weiterhin ist im vorliegenden Ausführungsbeispiel ein grundsätzlich optionales Dichtungselement 26 radial oberhalb des Dämpfungselements 24 angeordnet und mit diesem verbunden. Mit Hilfe des Dichtungselements 26 kann ein Austausch von Strömungsmedium in radialer Richtung zwischen benachbarten Laufschaufeln 12 hindurch reduziert oder vollständig unterbunden werden. Das Dichtungselement 26, welches wie das Dämpfungselement 24 radial nach oben gewölbt ist, ist im Querschnitt T-förmig ausgebildet und in eine korrespondierende Nut des Dämpfungselements 24 eingesteckt. Dabei ist jedoch zu betonen, dass das Dichtungselement 26 und das Dämpfungselements 24 grundsätzlich auch abweichende bzw. variierende Querschnittsgeometrien aufweisen können. Die genaue Funktion des Dämpfungselements 24 und des Dichtungselements 26 wird im Folgenden näher erläutert werden.

Die Schaufelplattform 10 umfasst weiterhin im Bereich der Nieder- und der Hochdruckseite ND, HD jeweils ein Führungselement 28, mittels welchen eine Unterseite des Dämpfungselements 24 abgestützt wird. Die Wand des Schaufelhalses 16 bzw. der Kavität 22 stützt seitliche Bereiche des Dämpfungselements 24 ab. Die Schaufelplattform 10 weist eine innen liegende Anlagefläche 30 auf, mit welcher das Dämpfungselement 24 und das Dichtungselement 26 zumindest beim Betrieb des Rotors in Anlage gebracht werden. Die Führungselemente 28 und die Anlagefläche 30 sind jeweils radial nach oben gewölbt bzw. gebogen, wodurch auch das Dämpfungselement 24 und Dichtungselement 26 im montierten Zustand radial nach oben gewölbt sind. Hierdurch liegen beide Elemente aufgrund der während des Betriebs des Rotors auftretenden Fliehkräfte zuverlässig an der Anlagefläche 30 an, so dass neben einer stabilen symmetrischen Selbstausrichtung auch eine besonders hohe Dämpfungs- und Dichtungswirkung erreicht wird. Weiterhin vereinfachen die gewölbten Führungselemente 28 und die gewölbte Anlagefläche 30 sowohl die Montage als auch die Demontage des Dämpfungselements 24 und des Dichtungselements 26.

Vorzugsweise werden das Dämpfungselement 24 und gegebenenfalls das Dichtungselement 26 zur Montage von der Niederdruckseite ND aus in die Kavität 22 der Schaufelplattform 10 bewegt, wobei die Führungselemente 28 und die gewölbte Anlagefläche 30 als Führungs- und Gleitflächen fungieren. Die Schaufelplattform 10 ist auf ihrer der Hochdruckseite HD zugewandten Seite derart ausgebildet, dass das Dämpfungselement 24 und damit gegebenenfalls auch das Dichtungselement 26 beim Erreichen der Montageposition anschlägt. Alternativ kann vorgesehen sein, dass das Dämpfungselement 24 und gegebenenfalls das Dichtungselement 26 mehrteilig ausgebildet sind und die betreffenden Elementteile sowohl von der Hochdruckseite HD als auch von der Niederdruckseite ND aus montiert bzw. demontiert werden.

Fig. 3 zeigt eine perspektivische Schnittansicht zweier benachbarter Laufschaufeln 12, zwischen welchen das Dämpfungselement 24 und das Dichtungselement 26 im Bereich der jeweiligen Schaufelplattformen 12 angeordnet sind. Dabei ist insbesondere erkennbar, dass das Dichtungselement 26 zumindest während des Betriebs des Rotors gegen die innenliegenden Anlageflächen 30 gedrückt wird und einen radialen Durchtritt von Strömungsmedium durch die Schaufeldeckbandspalte III zwischen den benachbarten Laufschaufeln 12 reduziert bzw. vollständig verhindert. Entsprechend wird auch das Dämpfungselement 24 gegen die Anlageflächen 30 gedrückt, wodurch eine besonders gute Dämpfungswirkung erzielt wird. Darüber hinaus wird hierdurch auch die Dichtwirkung des Dichtungselements 26 weiter verbessert.

Fig. 4 zeigt zur weiteren Verdeutlichung eine vergrößerte Perspektivansicht des in Fig. 3 gezeigten Details IV. Dabei ist gut erkennbar, dass die Kontaktgeometrie der Anlageflächen 30 und des Dämpfungselements 24 optimal aneinander angepasst sind, wodurch während des Betriebs eine besonders hohe Dämpfungswirkung erzielt wird. Darüber hinaus ist auch die Geometrie des Dichtungselements 26 derart an die Kontaktgeometrie der benachbarten Anlageflächen 30 angepasst, dass auch das Dichtungselement 26 zumindest während des Betriebs aufgrund der auftretenden Fliehkräfte flächig an den benachbarten Anlageflächen 30 anliegt und die Schaufeldeckbandspalte III abdichtet. Dabei kann grundsätzlich auch vorgesehen sein, dass ein Mittenbereich des Dämpfungselements 24 gegenüber den Enden des Dämpfungselements 24 biege- bzw. torsionsweicher ausgebildet ist, um eine besonders sichere Anlage zu ermöglichen. Alternativ oder zusätzlich kann grundsätzlich vorgesehen sein, dass der Kontakt zwischen dem Dämpfungselement 24 und den Anlageflächen 30 über die gesamte Länge des Dämpfungselements 24 oder nur über bestimmte Längenbereiche des Dämpfungselements 24 erzeugt wird.

## Patentansprüche

1. Rotor für eine Strömungsmaschine, mit Laufschaufeln (12), die mit einem Rotorgrundkörper (14) verbunden sind, wobei zwischen Schaufelplattformen (10) von wenigstens zwei benachbarten Lautschaufeln (12) ein Dämpfungselement (24) zum Dämpfen von Schaufelschwingungen angeordnet ist, wobei das Dämpfungselement (24) entlang seiner bezüglich einer Drehachse des Rotors axialen Erstreckung radial nach oben gewölbt ist, und wobei zwischen wenigstens zwei benachbarten Laufschaufeln (12) ein Dichtungselement (26) angeordnet ist, mittels welchem ein Austausch von Strömungsmedium in radialer Richtung zwischen den Laufschaufeln (12) hindurch zumindest reduzierbar ist, **dadurch gekennzeichnet, dass** das Dichtungselement (26) radial oberhalb des Dämpfungselements (24) angeordnet ist.

2. Rotor nach Anspruch 1, **dadurch gekennzeichnet, dass** das Dichtungselement (26) mit dem Dämpfungselement (24) verbunden und/oder entlang seiner bezüglich einer Drehachse des Rotors axialen Erstreckung radial nach oben gewölbt ist.

3. Rotor nach einem der Ansprüche 1 bis 2, **dadurch gekennzeichnet, dass** ein Mittenbereich des Dämpfungselements (24) gegenüber den Enden des Dämpfungselements (24) biege- und/oder torsionsweicher ausgebildet ist.

4. Rotor nach einem der Ansprüche 1 bis 3, **dadurch gekennzeichnet, dass** das Dämpfungselement (24) mehrteilig und/oder im Querschnitt spiegelsymmetrisch ausgebildet ist.

5. Rotor nach einem der Ansprüche 1 bis 4, **dadurch gekennzeichnet, dass** unterhalb einer Schaufelplattform (10) wenigstens einer Laufschaufel (12) zumindest eine Kavität (22) ausgebildet ist, innerhalb welcher das Dämpfungselement (24) und/oder gegebenenfalls das Dichtungselement (26) bereichsweise angeordnet ist.

6. Rotor nach einem der Ansprüche 1 bis 5, **dadurch gekennzeichnet, dass** die Schaufelplattform (10) wenigstens einer Laufschaufel (12) ein Führungselement (28) umfasst, mittels welchem eine Seite und/oder eine Unterseite des Dämpfungselements (24) abstützbar ist.

7. Rotor nach Anspruch 6, **dadurch gekennzeichnet, dass** das Führungselement (28) im Bereich einer Hochdruckseite (HD) und/oder einer Niederdruckseite (ND) des Rotors angeordnet ist.

8. Rotor nach einem der Ansprüche 1 bis 7, **dadurch gekennzeichnet, dass** im radial äußeren Bereich wenigstens einer Schaufelplattform (10) eine innenliegende Anlagefläche (30) vorgesehen ist, mit welcher das Dämpfungselement (24) und/oder gegebenenfalls das Dichtungselement (26) zumindest beim Betrieb des Rotors in Anlage bringbar ist.

9. Rotor nach einem der Ansprüche 1 bis 8, **dadurch gekennzeichnet, dass** die Schaufelplattform (10) wenigstens einer Laufschaufel (12) ein Schaufeldeckband (19) zum zumindest teilweisen Begrenzen eines Strömungskanals der Strömungsmaschine bildet.

10. Rotor nach einem der Ansprüche 1 bis 9, **dadurch gekennzeichnet, dass** die Laufschaufeln (12) lösbar oder stoffschlüssig mit dem Rotorgrundkörper (14) verbunden sind.

11. Strömungsmaschine mit einem Rotor nach einem der Ansprüche 1 bis 10.

12. Verfahren zum Herstellen, Reparieren und/oder Überholen eines Rotors für eine Strömungsmaschine, bei welchem Laufschaufeln (12) mit einem Rotorgrundkörper (14) verbunden werden, wobei zwischen wenigstens zwei benachbarten Laufschaufeln (12) ein Dämpfungselement (24) zum Dämpfen von Schaufelschwingungen angeordnet wird, wobei das Dämpfungselement (24) entlang seiner bezüglich einer Drehachse des Rotors axialen Erstreckung radial nach oben gewölbt wird, wobei zwischen wenigstens zwei benachbarten Laufschaufeln (12) zusätzlich ein Dichtungselement (26) angeordnet wird, mittels welchem während des Betriebs der Strömungsmaschine ein Austausch von Strömungsmedium in radialer Richtung zwischen den Laufschaufeln hindurch zumindest reduziert wird und wobei das Dämpfungselement (24) von einer Niederdruckseite (ND) und/oder einer Hochdruckseite (HD) des Rotors aus zwischen die Schaufelplattformen (10) bewegt wird,
**dadurch gekennzeichnet, dass** das Dichtungselement (26) radial oberhalb des Dämpfungselements (24) angeordnet ist.

13. Verfahren nach Anspruch 12, **dadurch gekennzeichnet, dass** das Dämpfungselement (24) entlang innenliegender Anlageflächen (30) der benachbarten Schaufelplattformen (10) bewegt wird, wobei die Anlageflächen (30) entlang ihrer bezüglich einer Drehachse des Rotors axialen Erstreckung radial nach oben gewölbt sind.

## Claims

1. Rotor for a turbomachine, comprising rotor blades (12) which are connected to a rotor main body (14), a damping element (24) for damping blade vibrations being arranged between blade platforms (10) of at least two adjacent rotor blades (12), the damping element (24) being curved radially upward along the extent thereof, which is axial with respect to a rotational axis of the rotor, and a sealing element (26) being arranged between at least two adjacent rotor blades (12), by means of which sealing element an exchange of flow medium in the radial direction through the rotor blades (12) therebetween can be at least reduced, **characterized in that** the sealing element (26) is arranged radially above the damping element (24).

2. Rotor according to claim 1, **characterized in that** the sealing element (26) is connected to the damping element (24) and/or is curved radially upward along the extent thereof, which is axial with respect to a rotational axis of the rotor.

3. Rotor according to either claim 1 or claim 2, **characterized in that** a central region of the damping element (24) is designed to be more flexible and/or more torsionally flexible compared with the ends of the damping element (24).

4. Rotor according to any of claims 1 to 3, **characterized in that** the damping element (24) is in multiple parts and/or has a mirror-symmetrical cross section.

5. Rotor according to any of claims 1 to 4, **characterized in that** at least one cavity (22) is formed beneath a blade platform (10) of at least one rotor blade (12), inside which cavity, in regions, the damping element (24) and/or optionally the sealing element (26) is arranged.

6. Rotor according to any of claims 1 to 5, **characterized in that** the blade platform (10) of at least one rotor blade (12) comprises a guide element (28) by means of which a side and/or an underside of the damping element (24) can be supported.

7. Rotor according to claim 6, **characterized in that** the guide element (28) is arranged in the region of a high-pressure side (HD) and/or a low-pressure side (ND) of the rotor.

8. Rotor according to any of claims 1 to 7, **characterized in that** an inner contact surface (30) is provided in the radially outer region of at least one blade platform (10), with which surface the damping element (24) and/or optionally the sealing element (26) can be brought into contact at least when the rotor is in operation.

9. Rotor according to any of claims 1 to 8, **characterized in that** the blade platform (10) of at least one rotor blade (12) forms a blade shroud (19) for defining a flow channel of the turbomachine at least in part.

10. Rotor according to any of claims 1 to 9, **characterized in that** the rotor blades (12) are detachably connected or integrally bonded to the rotor main body (14).

11. Turbomachine comprising a rotor according to any of claims 1 to 10.

12. Method for producing, repairing and/or overhauling a rotor for a turbomachine, in which method rotor blades (12) are connected to a rotor main body (14), a damping element (24) for damping blade vibrations being arranged between at least two adjacent rotor blades (12), the damping element (24) being curved radially upward along the extent thereof, which is axial with respect to a rotational axis of the rotor, a sealing element (26) additionally being arranged between at least two adjacent rotor blades (12), by means of which sealing element an exchange of flow medium in the radial direction through the rotor blades therebetween can be at least reduced during the operation of the turbomachine, and it being possible to move the damping element (24) out from between the blade platforms (10) on a low-pressure side (ND) and/or a high-pressure side (HD) of the rotor, **characterized in that** the sealing element (26) is arranged radially above the damping element (24).

13. Method according to claim 12, **characterized in that** the damping element (24) is moved along inner contact surfaces (30) of the adjacent blade platforms (10), the contact surfaces (30) being curved radially upward along the extent thereof, which is axial with respect to a rotational axis of the rotor.

## Revendications

1. Rotor de turbomachine muni d'aubes mobiles (12) reliées à un corps principal de rotor (14), un élément d'amortissement (24) pour l'amortissement de vibrations d'aube étant disposé entre des plateformes d'aube (10) d'au moins deux aubes mobiles (12) voisines, l'élément d'amortissement (24) étant courbé de manière radiale vers le haut le long de son extension axiale par rapport à un axe de rotation du rotor, et un élément d'étanchéité (26) étant disposé entre au moins deux aubes mobiles (12) voisines, élément au moyen duquel un échange de fluide d'écoulement peut au moins être réduit dans une direction radiale, à travers, entre les aubes mobiles (12), **caractérisé en ce que** l'élément d'étanchéité (26) est disposé de manière radiale au-dessus de l'élément d'amortissement (24).

2. Rotor selon la revendication 1, **caractérisé en ce que** l'élément d'étanchéité (26) est relié à l'élément d'amortissement (24) et/ou est courbé de manière radiale vers le haut le long de son extension axiale par rapport à un axe de rotation du rotor.

3. Rotor selon l'une des revendications 1 à 2, **caractérisé en ce qu'**une zone centrale de l'élément d'amortissement (24) est constitué face aux extrémités de l'élément d'amortissement (24) de manière souple en flexion et/ou en torsion.

4. Rotor selon l'une des revendications 1 à 3, **caractérisé en ce que** l'élément d'amortissement (24) est constitué en plusieurs parties et/ou de manière symétrique dans une section transversale.

5. Rotor selon l'une des revendications 1 à 4, **caractérisé en ce qu'**au moins une cavité (22) est constituée en-dessous d'une plateforme d'aube (10) d'au moins une aube mobile (12), cavité à l'intérieur de laquelle l'élément d'amortissement (24) et/ou éventuellement l'élément d'étanchéité (26) est disposé par zone.

6. Rotor selon l'une des revendications 1 à 5, **caractérisé en ce que** la plateforme d'aube (10) d'au moins une aube mobile (12) comporte un élément de guidage (28), au moyen duquel un côté et/ou un côté inférieur de l'élément d'amortissement (24) peut prendre appui.

7. Rotor selon la revendication 6, **caractérisé en ce que** l'élément de guidage (28) est disposé dans la zone d'un côté à forte pression (HD) et/ou d'un côté à faible pression (ND) du rotor.

8. Rotor selon l'une des revendications 1 à 7, **caractérisé en ce qu'**une surface d'appui (30) située à l'intérieur est prévue dans la zone radialement externe d'au moins une plateforme d'aube (10), surface avec laquelle l'élément d'amortissement (24) et/ou éventuellement l'élément d'étanchéité (26) peut être mis en appui au moins par le fonctionnement du rotor.

9. Rotor selon l'une des revendications 1 à 8, **caractérisé en ce que** la plateforme d'aube (10) d'au moins une aube mobile (12) forme une bande de couverture d'aube (19) pour la délimitation, au moins en partie, d'un conduit d'écoulement de la turbomachine.

10. Rotor selon l'une des revendications 1 à 9, **caractérisé en ce que** les aubes mobiles (12) sont reliées au corps principal de rotor (14) de manière amovible ou par liaison de matière.

11. Turbomachine munie d'un rotor selon l'une des revendications 1 à 10.

12. Procédé de fabrication, de réparation et/ou de révision d'un rotor de turbomachine, dans lequel les aubes mobiles (12) sont reliées à un corps principal de rotor (14), un élément d'amortissement (24) pour l'amortissement de vibrations d'aube étant disposé entre au moins deux aubes mobiles (12) voisines, l'élément d'amortissement (24) étant courbé de manière radiale vers le haut le long de son extension axiale par rapport à un axe de rotation du rotor, un élément d'étanchéité (26) étant en outre disposé entre au moins deux aubes mobiles (12) voisines, élément au moyen duquel un échange de fluide d'écoulement est au moins réduit dans une direction radiale entre les aubes mobiles, à travers, pendant le fonctionnement de la turbomachine, et l'élément d'amortissement (24) étant mis en mouvement à partir d'un côté à faible pression (ND) et/ou un côté à forte pression (HD) du rotor entre les plateformes d'aube (10), **caractérisé en ce que** l'élément d'étanchéité (26) est disposé de manière radiale au-dessus de l'élément d'amortissement (24).

13. Procédé selon la revendication 12, **caractérisé en ce que** l'élément d'amortissement (24) est mis en mouvement le long de surfaces d'appui (30) des plateformes d'aube (10) voisines, lesquelles surfaces sont situées à l'intérieur, les surfaces d'appui (30) étant courbées de manière radiale vers le haut le long de son extension axiale par rapport à un axe de rotation du rotor.
